# EUROPÄISCHE PATENTSCHRIFT

(11) **EP 2 925 607 B1**
(45) Veröffentlichungstag und Bekanntmachung des Hinweises auf die Patenterteilung: **13.04.2016**
(21) Anmeldenummer: 13795691.8
(22) Anmeldetag: 20.11.2013
(51) Int. Cl.: B64D 11/00, B64D 11/04, H01M 2/10, B64D 41/00, B64G 1/42

(54) **ENERGIEEINHEIT, KABINENMONUMENT UND FAHRZEUG, SOWIE VERFAHREN ZUR VERSORGUNG DER KABINE EINES FAHRZEUGS MIT EINEM BETRIEBSSTOFF**
ENERGY UNIT, CABIN MONUMENT AND VEHICLE, AS WELL AS A METHOD FOR SUPPLYING THE CABIN OF A VEHICLE WITH A PROCESS MATERIAL
UNITÉ D'ÉNERGIE, OBJET D'AMÉNAGEMENT DE CABINE ET VÉHICULE AINSI QUE PROCÉDÉ POUR ALIMENTER LA CABINE D'UN VÉHICULE EN CARBURANT

(30) Priorität: 30.11.2012 DE 102012023531
(43) Veröffentlichungstag der Anmeldung: 07.10.2015
(73) Patentinhaber: Diehl Aerospace GmbH, 88662 Überlingen (DE)
(72) Erfinder: KNEPPLE, Ronny, 88662 Überlingen (DE); SPETH, Bernd, 88662 Überlingen (DE)
(86) Internationale Anmeldenummer: PCT/EP2013/003497
(87) Internationale Veröffentlichungsnummer: WO 2014/082719

(56) Entgegenhaltungen:
- EP-A2- 2 213 571
- DE-A1-102007 054 291
- DE-A1-102010 018 273
- US-A1- 2007 113 921
- US-A1- 2008 026 278

## Beschreibung

Die Erfindung betrifft insbesondere eine Energieeinheit zur Erzeugung eines Betriebsstoffs an Bord eines Fahrzeugs, insbesondere Luftfahrzeugs, ein Kabinenmonument mit einer entsprechenden Energieeinheit, ein mit einer Energieeinheit ausgestattetes Fahrzeug und ein Verfahren zur Versorgung der Kabine eines Fahrzeugs mit einem Betriebsstoff.

Nach dem Stand der Technik ist es bekannt, zur Energieversorgung an Bord von Flugzeugen Brennstoffzellensysteme zu verwenden, die beispielsweise mit einem Flüssigbrennstoff betrieben werden können.

Die DE 10 2007 054 291 A1 wird als nächstliegender Stand der Technik angesehen und offenbart eine Energieversorgungseinrichtung zum Bereitstellen von Energie in einem Verkehrsflugzeug, bei der eine Brennstoffzelle samt Brennstoffvorrat nach Art eines Bordküchen-Trolleys ausgestaltet ist. Als Brennstoffvorrat sind flüssiger Wasserstoff und flüssiger Sauerstoff vorgesehen.

Aus der EP 2 213 571 A2 ist eine Energieversorgungseinrichtung für ein Flugzeug bekannt, welche eine Brennstoffzelle umfasst.

Bei vielen der bekannten Systeme zur Erzeugung von Energie unter Verwendung von Brennstoffzellen, insbesondere in Flugzeugen, ist die Handhabung noch vergleichsweise kompliziert und aufwändig. Wünschenswert hingegen wäre ein vergleichsweise einfach zu handhabendes System zur bordgebundenen Erzeugung von Energie oder eines Betriebsstoffs.

Ausgehend davon ist es eine Aufgabe der Erfindung, die Nachteile nach dem Stand der Technik zu beseitigen. Insbesondere soll eine vergleichsweise einfach zu handhabende Energieeinheit bzw. Vorrichtung zur Erzeugung eines Betriebsstoffs an Bord eines Fahrzeugs bereitgestellt werden. Unter gleichen Gesichtspunkten soll ein entsprechendes Kabinenmonument und Fahrzeug sowie ein Verfahren zur Versorgung einer Kabine eines Fahrzeugs mit einem Betriebsstoff bereitgestellt werden.

Diese Aufgabe wird insbesondere gelöst durch die unabhängigen Ansprüche. Ausgestaltungen ergeben sich insbesondere aus den abhängigen Ansprüchen.

Nach Patentanspruch 1 ist eine Energieeinheit, insbesondere eine Vorrichtung, zur Erzeugung eines Betriebsstoffs an Bord eines Fahrzeugs, insbesondere eines Luftfahrzeugs vorgesehen. Die Energieeinheit umfasst eine Brennstoffzelleneinheit mit zumindest einer Brennstoffzelle und eine von der Brennstoffzelleneinheit separat, insbesondere kofferartig, ausgebildete mobile Speichereinheit.

Unter einer kofferartig ausgebildeten mobilen Speichereinheit können insbesondere quaderförmige, insbesondere verschließbare, Behältnisse verstanden werden, welche bevorzugt manuell durch eine Person transportiert werden können, und welche einen, beispielsweise in einem Behältnis oder einer Hausung aufgenommenen, Speicher aufweisen.

Die mobile Speichereinheit ist als ein den Speicher tragender erster Rollwagen ausgebildet, was bedeuten soll, dass die Speichereinheit eine oder mehrere Rollen umfasst, mit welchen die Speichereinheit auf einem Untergrund manuell verfahren werden kann.

Ein entsprechender Rollwagen kann Abmessungen aufweisen, die einem Trolley für Bordküchen in Verkehrsflugzeugen entsprechen. Trolleys dieser Art können beispielsweise entsprechend dem Atlas-Standard ausgebildet sein. Als Rollwägen können im Sinne dieser Anmeldung auch andere verfahrbare Container oder Behälter verstanden werden, die den hierin angegeben Zwecken und Anforderungen genügen.

Rollwägen und dgl. können insbesondere dazu ausgebildet sein, in entsprechend ausgebildeten und angepassten Aufnahmebuchten einer Bordküche des Fahrzeugs aufgenommen zu werden.

Abgesehen von einer bordküchenseitigen Einbindung der Energieeinheit, bzw. der mobilen Speichereinheit, beispielsweise nach Art eines Trolleys, kann die mobile Speichereinheit, und generell die Energieeinheit auch in anderen Bereichen des Fahrzeugs untergebracht bzw. montiert sein. Insbesondere kann/können die mobile Speichereinheit bzw. Energieeinheit im Frachtbereich, in Monumenten, Aufenthaltsräumen, Waschräumen, Toilettenräumen usw. untergebracht sein.

Wie bereits angedeutet, umfasst die mobile Speichereinheit einen Speicher, insbesondere in Form eines Tanks, welcher dazu ausgebildet und eingerichtet ist, zumindest einen zum Betrieb der Brennstoffzelleneinheit, insbesondere zumindest einer Brennstoffzelle der Brennstoffzelleneinheit, erforderlichen Energieträgers, insbesondere Brennstoffs, zu speichern bzw. zu bevorraten.

Die mobile Speichereinheit und die Brennstoffzelleneinheit sind derart aneinander bzw. miteinander koppelbar, dass im ordnungsgemäßen aneinander gekoppelten Zustand oder Betriebsmodus ein erster Anschluss der mobilen Speichereinheit mit einem korrespondierenden, zweiten Anschluss der Brennstoffzelleneinheit verbunden ist. Die Begriffsfamilie aneinander bzw. miteinander koppeln usw. soll insbesondere weit verstanden werden, und insoweit Anordnungen umfassen, bei welchen die mobile Speichereinheit und die Brennstoffzelleneinheit so ausgebildet sind, dass diese hintereinander, aufeinander oder nebeneinander miteinander verbunden, aneinander gefügt, aneinandergekuppelt werden können und/oder zu einer funktionellen Einheit verbindbar sind, insbesondere in einer wiederholbar lösbaren Weise.

Besonders bevorzugt werden der erste Anschluss und der zweite Anschluss beim Koppeln der Speichereinheit und der Brennstoffzelleneinheit automatisch, und in betriebsbereiter Weise, miteinander verbunden.

Bei der vorgeschlagenen Energieeinheit ist vorgesehen, dass der erste und zweite Anschluss im aneinandergekoppelten Zustand derart miteinander gekoppelt sind, dass zumindest der zumindest eine Energieträger vom Speicher der Brennstoffzelle zu deren Betrieb, insbesondere zur Erzeugung von elektrischer Energie, zugeführt werden kann.

Mit der vorgeschlagenen Energieeinheit kann insbesondere die Bereitstellung des Energieträgers anhand der mobilen Speichereinheit in besonders einfacher

Weise durchgeführt werden. Insbesondere kann beim Austausch eines z.B. leeren, oder teilweise leeren, Speichers gegen einen gefüllten Speicher die Brennstoffzelleneinheit in der jeweils montierten Position und/oder Lage verbleiben, was einen Speicher-Wechsel deutlich vereinfacht.

Erfindungsgemäß umfasst die Brennstoffzelleneinheit einen zweiten Rollwagen, in welchem die zumindest eine Brennstoffzelle aufgenommen ist, wobei der zweite Anschluss, und ggf. der weitere Anschluss, am zweiten Rollwagen angebracht sind. Eine Ausführung der Brennstoffzelleneinheit in Form eines Rollwagens ergibt eine vereinfachte Austauschhandhabung, was insbesondere für Wartungszwecke von Vorteil ist. Sind die Brennstoffzelleneinheit und die mobile Speichereinheit jeweils als Rollwagen ausgebildet, können diese je nach Bedarf einzeln oder auch zusammen, insbesondere im aneinander gekoppelten Zustand, gehandhabt werden.

Durch die Ausgestaltung der Brennstoffzelleneinheit, in Form und Handhabung eines kofferartigen Rollwagens, kann diese, beispielsweise zu Wartungszwecken, vergleichsweise einfach entfernt und/oder ausgetauscht werden. Ist ein Austausch oder Wechsel der Brennstoffzelleneinheit nicht erforderlich, so kann mit der hierin vorgeschlagenen Bauweise, die mobile Speichereinheit alleine getauscht oder gewechselt werden. Hierdurch kann der Aufwand gegenüber kombiniert integrierten Systemen verringert werden.

Eine besonders einfache Handhabung ergibt sich insbesondere auch dadurch, dass der erste Anschluss und der zweite Anschluss automatisch miteinander verbunden werden, bzw. verbunden sind, sobald die Brennstoffzelleneinheit und die mobile Speichereinheit ordnungsgemäß miteinander oder aneinander gekoppelt sind. Beim Abkoppeln bzw. Trennen werden der erste und zweite Anschluss bevorzugt automatisch voneinander getrennt. Insbesondere auf Grund der automatischen An- bzw. Abkopplung kann eine sichere Betriebsweise erreicht werden.

Es sei erwähnt, dass als Energieträger insbesondere Stoffe wie Propylenglycol, Methanol, Ethanol, Propanol, Kerosin, Diesel, Dimethylether, N-Ethylcarbazol usw. in Betracht kommen. Angemerkt sein noch, dass Wasserstoff in flüssiger oder gasförmiger Form grds. in Betracht kommt, Jedoch erscheint Wasserstoff als Energieträger in gebundener Form in Sachen Sicherheit vorteilhafter zu sein. Als Energieträger können insbesondere alle, in besondere zu reformierenden Stoffe oder Substanzen verwendet werden, die bevorzugt flüssig, nicht explosiv, nicht brennbar, reaktionsarm und/oder nicht toxisch sind.

Nach einer Ausgestaltung ist vorgesehen, dass im ordnungsgemäß aneinandergekoppelten Zustand jeweils zumindest ein weiterer Anschluss der mobilen Speichereinheit und der Brennstoffzelleneinheit miteinander verbunden sind. Die Verbindung der jeweils korrespondierenden weiteren Anschlüsse ist bzw. erfolgt derart, dass zwischen der mobilen Speichereinheit, insbesondere zwischen Speicher und Brennstoffzelleneinheit, insbesondere der Brennstoffzelle, elektrische Energie, thermische Energie, elektronische Daten und/oder Brennstoffzellenabgase austauschbar sind.

Unter dem Begriff Brennstoffzellenabgas, oder kurz "Abgas" soll im Sinne der vorliegenden Erfindung insbesondere ein im Betrieb der Brennstoffzelle entstehendes Gas verstanden werden, welches bezüglich Luft einen verminderten Sauerstoffgehalt aufweist. Der Sauerstoffgehalt des Abgases kann zumindest 40%, vorteilhafterweise zumindest 50%, geringer als der Sauerstoffgehalt der Luft, insbesondere Umgebungsluft, sein.

Die weiteren Anschlüsse können in Anlehnung an den ersten und zweiten Anschluss derart ausgebildet und angeordnet sein, dass zueinander korrespondierende weitere Anschlüsse bei ordnungsgemäßer Kopplung der Speichereinheit und der Brennstoffzelleneinheit automatisch miteinander verbunden werden, und beim Abkoppeln automatisch voneinander getrennt werden. Auf diese Weise kann eine einfache und auch sichere Austauschhandhabung sichergestellt werden.

Insbesondere durch eine separate Ausgestaltung der Brennstoffzelleneinheit wird es möglich, die Brennstoffzelleneinheit mit Speichereinheiten unterschiedlicher Größe und unterschiedlichem Speichervolumen zu verbinden. So kann die Energieeinheit in einfacher Weise an den jeweiligen Einsatzzweck und die jeweiligen Einsatzbedingungen, wie z.B. Mindestbetriebsdauer usw., angepasst werden. Nach einer weiteren Ausgestaltung ist, wie bereits angedeutet, vorgesehen, dass der erste und zweite Anschluss, und ggf. die weiteren Anschlüsse, derart ausgebildet sind, dass diese bei ordnungsgemäßer Aneinanderkopplung der Brennstoffzelleneinheit und der mobilen Speichereinheit, insbesondere des ersten und zweiten Rollwagens, automatisch miteinander verbunden werden.

Insbesondere in Ausführung in der Form von Rollwägen kann die Energieeinheit des Weiteren zumindest eine Aufnahmebucht eines Kabinenmonuments, insbesondere einer Bordküche, eines Fahrzeugs, insbesondere eines Verkehrsflugzeugs, umfassen. Die zumindest eine Aufnahmebucht ist dazu ausgebildet, zumindest die Brennstoffzelleneinheit und/oder die mobile Speichereinheit, insbesondere den ersten Rollwagen, darin mobil austauschbar aufzunehmen.

Nach einer weiteren Ausgestaltung ist vorgesehen, dass die Brennstoffzelleneinheit, insbesondere der zweite Rollwagen, und die mobile Speichereinheit, insbesondere der erste Rollwagen, jeweils gesondert in die zumindest eine Aufnahmebucht aufgenommen und/oder davon entfernt werden können.

Bevorzugt weist die Brennstoffzelleneinheit, insbesondere der zweite Rollwagen, eine erste Schnittstelle und die Aufnahmebucht eine damit verbindbare zweite Schnittstelle auf. Die erste und zweite Schnittstelle sind dabei derart ausgebildet, dass diese beim Einführen bzw. Entfernen der Brennstoffzelleneinheit in bzw. von der Aufnahmebucht bevorzugt automatisch miteinander verbunden bzw. voneinander getrennt werden. Bevorzugt sind die erste und zweite Schnittstelle derart ausgebildet, dass bei ordnungsgemäßer Ankopplung der Brennstoffzelleneinheit über die Schnittstellen zumindest ein Austausch von elektrischer Energie mit einem externen Verbraucher möglich ist, d. h. dass ein externer Verbraucher mit elektrischer Energie versorgt werden kann.

In einer bevorzugten Ausgestaltung ist vorgesehen, dass die erste und zweite Schnittstelle dazu ausgebildet sind, thermische Energie, elektrische Energie, elektrische Signale, Reaktionswasser und/oder Brennstoffzellenabgase auszutauschen. Damit ist es möglich, auch externe Verbraucher, d. h. Verbraucher, die nicht von der Energieeinheit umfasst sind, mit entsprechenden Betriebsstoffen zu versorgen. Beispielsweise ist es möglich, Bordküchengeräte in einer Bordküche eines Flugzeugs mit elektrischer und/oder thermischer Energie zu versorgen. Das beim Betrieb der Brennstoffzelle gebildete Reaktionswasser kann insbesondere unmittelbar oder mittelbar nach Zwischenspeicherung in einem Tank einem Verbraucher in der Kabine zugeführt werden.

Im Hinblick auf die Brennstoffzellenabgase kann es für die Betriebssicherheit von Vorteil sein, wenn der Speicher derart mit der Brennstoffzelleneinheit verbindbar ist, dass im verbundenen Zustand zumindest ein Teilvolumen des durch die Brennstoffzelleneinheit erzeugten Brenstoffzellenabgases in ein sich bei Leerung des Speichers ausbildendes freies Speichervolumen zu dessen Inertisierung eingeleitet werden kann. Die Brennstoffzellenabgase können jedoch auch an anderen Stellen zur Inertisierung verwendet werden.

Nach einer Ausgestaltung umfasst die Energieeinheit des Weiteren ein den Speicher umgebendes erstes Umgehäuse und/oder ein die Brennstoffzelleneinheit umgebendes zweites Umgehäuse, wobei ein Abgasstrang der Brennstoffzelleneinheit derart ausgebildet ist, dass das innere Volumen des ersten und/oder zweiten Umgehäuses durch Abgase der Brennstoffzelleneinheit inertisierbar ist. In dieser Ausgestaltung kann eine besonders sichere Betriebsweise erreicht werden.

In einer noch weiteren Ausgestaltung ist vorgesehen, dass die Energieeinheit des Weiteren einen dem Speicher nachgeordneten Reformer zur Umwandlung eines im Speicher gespeicherten Primärbrennstoffs, insbesondere eines Flüssigbrennstoffs, in einen zum Betrieb der Brennstoffzelle erforderlichen Sekundärbrennstoff, insbesondere in einen gasförmigen Brennstoff, umfasst, wobei es sich bei dem Primärbrennstoff bevorzugt um ein Propylen-Wasser-Gemisch handeln kann. Auch die weiter oben genannten Energieträger kommen hierfür in Betracht.

Der Reformer kann Bestandteil der mobilen Speichereinheit oder der Brennstoffzelleneinheit sein. Im ersten Fall wird der Brennstoffzelleneinheit über den ersten Anschluss als Energieträger ein Reformat zugeführt. Im zweiten Fall, d. h. wenn der Reformer in der Brennstoffzelleneinheit angeordnet ist, wird über den ersten und zweiten Anschluss der Primärbrennstoff ausgetauscht.

Nach Anspruch 11 ist ein Kabinenmonument, insbesondere eine Bordküche, für eine Kabine eines Fahrzeugs, insbesondere eines Verkehrsflugzeugs, vorgesehen. Das Kabinenmonument umfasst eine spezielle Aufnahmebucht, welche derart ausgebildet und eingerichtet ist, dass zumindest eine mobile Speichereinheit einer wie oben beschriebenen Energieeinheit darin aufnehmbar ist, derart, dass im ordnungsgemäß und betriebsbereit aufgenommenen Zustand die Brennstoffzelleneinheit der Energieeinheit mit einem durch die mobile Speichereinheit bereitgestellten Energieträger vorsorgt wird, und durch die Brennstoffzelle der Brennstoffzelleneinheit erzeugte elektrische Energie einem elektrischen Verbraucher zugeführt und/oder in ein elektrisches Verbrauchernetz des Fahrzeugs, insbesondere der Kabine und/oder des Monuments, eingespeist werden kann.

Bei dem elektrischen Verbraucher kann es sich insbesondere um einen hinsichtlich der Energieeinheit externen elektrischen Verbraucher, beispielsweise des Kabinenmonuments, und/oder des Fahrzeugs, insbesondere Verkehrsflugzeugs, handeln. Wegen Vorteilen und vorteilhaften Wirkungen des Kabinenmonuments wird insbesondere auf die Ausführungen zur Energieeinheit verwiesen, die entsprechend gelten.

Die Aufnahmebucht ist insbesondere derart an die Energieeinheit angepasst, dass ein durch die Energieeinheit erzeugter Betriebsstoff, insbesondere elektrische, thermische Energie, Reaktionsprodukte und/oder Abgase von der Energieeinheit abgeführt und einem jeweiligen Verbraucher des Kabinenmonuments, der Kabine und/oder des Fahrzeugs, insbesondere Verkehrsflugzeugs, zugeführt werden können.

Nach Anspruch 12 ist ein Fahrzeug, insbesondere ein Verkehrsflugzeug, vorgesehen, welches eine Kabine mit einem wie vorweg beschriebenen Kabinenmodul oder zumindest einer wie weiter oben beschriebenen Energieeinheit umfasst. Wegen Vorteilen und vorteilhaften Wirkungen wird auf die obigen Ausführungen verwiesen.

Nach einer Ausgestaltung ist ein Energienetz des Kabinenmoduls oder der Energieeinheit von weiteren Energie- und/oder Bordnetzen des Fahrzeugs im regulären Betrieb entkoppelt. Unter dem Begriff Energienetz soll insbesondere ein Leitungsnetz verstanden werden, mit welchem zumindest die von der Energieeinheit erzeugte elektrische Energie an jeweilige Verbraucher geleitet werden kann. Das Energienetz kann dabei ein lokales Energienetz sein. Möglich ist es jedoch auch, dass es sich bei dem Energienetz um ein, zumindest im Hinblick auf die Versorgung der Kabine mit elektrischer Energie, globales Energienetz handelt. Global soll dabei insbesondere bedeuten, dass die von der Energieeinheit erzeugte Energie im Wesentlichen bzw. grds. an jeder Stelle der Kabine durch entsprechende Leitungen verfügbar gemacht werden kann.

Bei dem weiteren Energie- und/oder Bordnetz handelt es sich bevorzugt um ein Energienetz, insbesondere Stromnetz, mit welchem zum Betrieb des Fahrzeugs essentielle, insbesondere flugrelevante, Komponenten und Systeme betrieben bzw. gespeist werden. Das Energienetz der Energieeinheit kann dann als ein zur Versorgung nicht-essentieller Verbraucher des Fahrzeugs, insbesondere der Kabine, ausgelegtes Netz sein. In diesem Sinne können das Energienetz der Energieeinheit und das Energienetz für essentielle Verbraucher vollständig voneinander getrennt werden und getrennt betrieben werden. Die vollständige Tren nung kann zumindest für den regulären Betrieb aufrechterhalten werden, wobei es denkbar ist, dass im Falle einer Notsituation bei Ausfall der essentiellen Energieversorgung, das Energienetz der Energieeinheit mit dem essentiellen Energienetz zur Einspeisung von Notstrom verbunden wird oder werden kann.

Eine vollständige Trennung der Energienetze für essentielle Verbraucher eines Fahrzeugs, insbesondere eines Flugzeugs und nicht-essentielle Verbraucher, insbesondere der Kabine des Fahrzeugs oder Flugzeugs, hat den Vorteil, dass die jeweiligen Energienetze besser an die jeweiligen Anforderungen angepasst und entsprechend ausgelegt werden können. Angemerkt soll an dieser Stelle noch werden, dass das Energienetz der Energieeinheit auch für lediglich einen Teil der nicht-essentiellen Verbraucher vorgesehen und ausgelegt sein kann. Insbesondere kommen hier solche Verbraucher in Betracht, bei welchen über eine Betriebsphase des Fahrzeugs, insbesondere über eine Flugphase, z.B. von Start bis Landung, deutliche Lastspitzen auftreten. Entsprechende Verbraucher sind beispielsweise zur Bereitung von Warmspeisen ausgebildete Geräte in der Bordküche eines Verkehrsflugzeugs.

Nach Anspruch 14 ist ein Verfahren zur Versorgung einer Kabine, insbesondere eines Kabinenmonuments eines Fahrzeugs, insbesondere eines Verkehrsflugzeugs, mit zumindest einem Betriebsstoff. Bei dem vorgeschlagenen Verfahren wird eine gemäß den obigen Ausführungen ausgebildete Energieeinheit, mit einer Brennstoffzelleneinheit und einer davon separat ausgebildeten mobilen Speichereinheit verwendet.

Konkret wird bei dem Verfahren die Brennstoffzelleneinheit, insbesondere eine Brennstoffzelle der Brennstoffzelleneinheit, aus dem Speicher der mobilen Speichereinheit mit einem Energieträger versorgt, wobei die Brennstoffzelleneinheit aus dem Energieträger den zumindest einen Betriebsstoff erzeugt. Der durch die Brennstoffzelleneinheit aus dem Energieträger erzeugte Betriebsstoff, der beispielsweise als elektrische Energie, thermische Energie und/oder Brennstoffzellenabgasen vorliegen kann, wird bei dem vorgeschlagenen Verfahren einem Verbraucher der Kabine zugeführt. Der Verbraucher kann insbesondere Bestandteil der Kabine, insbesondere des Kabinenmonuments sein. Beispielsweise kann es sich bei dem Verbraucher um ein in einer Bordküche eines Fahrzeugs betreibbares elektrisches Gerät handeln.

Der Vorteil des Verfahrens besteht insbesondere darin, dass die Brennstoffzelleneinheit aus einer separaten, mobilen Speichereinheit, insbesondere einem separaten, insbesondere bezüglich des Kabinenmoduls mobil eingerichteten, Energiespeicher, versorgt wird. Dies hat insbesondere den Vorteil einer vergleichsweise einfachen Versorgung der Brennstoffzelleneinheit mit dem Energieträger.

In einer Ausgestaltung des Verfahrens ist vorgesehen, dass zur Versorgung der Brennstoffzelleneinheit mit dem zum Betrieb erforderlichen Energieträger die mobile Speichereinheit austauschbar mit der Brennstoffzelleneinheit gekoppelt wird, wobei Anschlüsse zum Austausch des Energieträgers bei der Kopplung der mobilen Speichereinheit mit der Brennstoffzelleneinheit automatische miteinander verbunden werden. In dieser Variante ist eine besonders anwenderfreundliche und sichere Handhabung der Energieeinheit möglich.

In einer weiteren Ausgestaltung des Verfahren ist vorgesehen, dass durch die Energieeinheit erzeugte Energie, insbesondere elektrische Energie, in ein Energienetz eingespeist wird, welches vollständig getrennt ist von einem weiteren Energienetz des Fahrzeugs, insbesondere Luftfahrzeugs. Dabei ist das Energienetz dazu ausgelegt und eingerichtet, im Normalbetrieb des Fahrzeugs zumindest Phasenweise ausschließlich zum Betrieb des Fahrzeugs nicht-essentielle Verbraucher mit Energie, insbesondere elektrischer Energie, zu versorgen. Das weitere Energienetz ist dazu ausgelegt und eingerichtet ist, im Normalbetrieb des Fahrzeugs zumindest Phasenweise ausschließlich zum Betrieb des Fahrzeugs essentielle Verbraucher mit Energie, insbesondere elektrischer Energie, zu versorgen. Die vorgeschlagene Aufteilung in zumindest ein essentielles und ein nicht-essentielles Energienetz bietet den Vorteil, dass die Verteilung und Bereitstellung, insbesondere die prospektive Bereitstellung, der Energie vereinfacht werden kann.

Hingewiesen sei darauf, dass im Rahmen der Erfindung die Brennstoffzelleneinheit und die mobile Speichereinheit entsprechend den obigen Ausführungen ausgebildet sein können. Insbesondere kann/können die mobile Speichereinheit und/oder die Brennstoffzelleneinheit, bevorzugt in kofferartiger Ausbildung, in Form von Rollwägen ausgebildet sein. Bei einer Ausgestaltung in Form von Rollwagen kann eine einfache Handhabung, insbesondere beim Austausch eines jeweiligen Rollwagens und/oder beim Verbinden eines Rollwagens mit der jeweils anderen Komponente bzw. dem anderen Rollwagen, erreicht werden.

Wegen weiterer Vorteile wird auf die obigen und auch nachfolgenden Ausführungen verwiesen.

Zusätzlich zu den obigen Ausführungen werden nachfolgend noch diverse, insbesondere optionale, Einzelheiten genauer beschrieben.

Zur Inertisierung, insbesondere eines Umgehäuses, der Brennstoffzelleneinheit oder der mobilen Speichereinheit kann die Brennstoffzelle mit einer Gasabführleitung verbunden sein, derart, dass Brennstoffzellenabgase in einen von einem Umgehäuse der Brennstoffzelleneinheit bzw. der Speichereinheit umschlossenen Raum eingeleitet werden können. Bei den Brennstoffzellenabgasen kann es sich insbesondere um Brennstoffzellenabluft handeln. Die Brennstoffzellenabluft kann kathoden- und/oder anodenseitig abgegriffen und zur Inertisierung verwendet werden. Bei Brennstoffzellen-Kathodenabluft kann es sich insbesondere um stickstoffangereicherte Luft handeln, die aufgrund des erhöhten Stickstoffgehalts inertisierende Eigenschaften aufweist. Bei Brennstoffzellen-Anodenabluft kann es sich insbesondere um mit Kohlendioxid (CO₂) angereicherte Luft handeln, die ebenfalls inertisierende Eigenschaften aufweist.

Das Umgehäuse kann beispielsweise dazu ausgebildet sein, den Speicher bzw. die Brennstoffzelle und andere Komponenten darin aufzunehmen. Vorzugsweise ist das Umgehäuse gasdicht ausgebildet, was insbesondere bedeuten soll, dass das Umgehäuse gasdicht verschlossen werden kann. Unter dem Begriff gasdicht soll insbesondere eine Abdichtung gegen Wasserstoffgase und andere zum oder beim oder zum Betrieb der Brennstoffzelle auftretenden bzw. verwendeten Gase verstanden werden.

Durch eine entsprechende Verbindung der inneren Volumina der Umgehäuse mit der Gasabführleitung können diese mit Brennstoffzellenabgasen gefüllt und insoweit inertisiert werden als der Sauerstoffgehalt der Brennstoffzellenabgase gegenüber der Außenluft deutlich verringert ist. Der Sauerstoffgehalt, bzw. die Sauerstoffkonzentration im Umgehäuse kann auf diese Weise insbesondere derart verringert werden, dass dieser zumindest 40 %, vorzugsweise zumindest 50 % geringer ist als der der gewöhnlichen Umgebungsluft. Durch den geringeren Sauerstoffgehalt ergibt sich eine flammhemmende Wirkung, so dass ein besonders sicherer Betrieb gewährleistet werden kann.

Wie oben bereits erwähnt wurde, umfasst die Energieeinheit zwei separate Einheiten, eine Brennstoffzelleneinheit und eine mobile Speichereinheit. Denkbar ist auch, dass die Energieeinheit in mehr als zwei separate, und insbesondere separat handhabbare, Komponenten bzw. Einheiten unterteilt wird bzw. ist. Denkbar wäre beispielsweise, dass Komponenten einer elektronischen Steuerung, im Allgemeinen zum Betrieb der Energieeinheit erforderliche und/oder verwendete elektronische Komponenten in einer separaten Komponente, bzw. in einer separaten Einheit aufgenommen bzw. untergebracht sind.

Separate Einheiten können beispielsweise auch zur Aufnahme eines Batteriespeichers vorgesehen bzw. ausgebildet sein. Die separate ausgebildeten Einzelelemente und Einzelkomponenten sind insbesondere derart ausgebildet, dass sich diese in einfacher Weise, zu einem Gesamtsystem kombinieren lassen. Eine Kombination zum Gesamtsystem soll dabei insbesondere so verstanden werden, dass die Einzelkomponenten zu einem einzeln handhabbaren Gegensand kombiniert werden, derart dass die Einzelkomponenten funktions- und betriebsbereit miteinander verbunden sind.

Bei dem Gesamtsystem ist es nicht zwingend erforderlich, dass die Einzelkomponenten jeweils unterschiedliche Funktionen aufweisen. Möglich ist es insbesondere, dass zwei Einzelkomponenten gleiche Funktionalitäten aufweisen. Ein Beispiel hierzu wäre ein Gesamtsystem bei welchem zwei Speichereinheiten und eine Brennstoffzelleneinheit kombiniert werden, und bei welchem die Brennstoffzellen der Brennstoffzelleneinheit von beiden Speichereinheiten aus mit dem jeweiligen Energieträger versorgt werden kann. Ein weiteres Beispiel ist ein Gesamtsystem mit einer Brennstoffzelleneinheit, einer Speichereinheit und einer Batterieeinheit welche eine insbesondere zur Zwischenspeicherung von elektrischer Energie ausgebildete Sekundärbatterie umfassen kann. Weitere Kombinationen, auch mit weiteren Einzelkomponenten sind möglich.

Eine funktions- und betriebsbereite Kombination und Verbindung der Einzelkomponenten erfolgt bevorzugt bei allen Einzelkomponenten derart, dass alle notwendigen und erforderlichen Verbindungen zwischen den Einzelkomponenten automatisch bei mechanischer Verbindung derselben hergestellt, insbesondere automatisch hergestellt, werden. Dazu können die Einzelkomponenten jeweils entsprechende, insbesondere paarweise zueinander korrespondierende, Schnittstellen und Gegenschnittstellen mit jeweiligen Anschlüssen, Kontakten usw. aufweisen, insbesondere derart, dass die bei Verbindung der Einzelkomponenten die zueinander korrespondierenden Schnittstellen und entsprechenden Anschlüsse, Kontakte usw. automatisch miteinander verbunden werden. Entsprechend kann eine automatische Trennung der zueinander korrespondierenden Schnittstellen, Anschlüsse oder Kontakte erfolgen, wenn die Einzelkomponenten bei Bedarf wieder von einander getrennt werden.

Das Gesamtsystem kann derart ausgelegt sein, dass die Einzelkomponenten bzw. Untereinheiten im miteinander verbundenen Zustand einer jeweils geeigneten Anordnung neben- hinter- und/oder übereinander angeordnet sind. Hierbei kann das Gesamtsystem derart ausgebildet sein, dass die Position der Einzelkomponenten fest vorgegeben ist. Möglich oder denkbar ist es jedoch auch, dass die Einzelkomponenten in unterschiedlicher Positionierung miteinander verbunden werden können. Insbesondere in letzterem Fall können die jeweiligen Einzelkomponenten jeweils genormte, d. h. aneinander und beliebig paarweise miteinander kombinierbare Schnittstellen aufweisen. In den Abmessungen können das Gesamtsystem und die Einzelkomponenten derart ausgelegt sein, dass das Gesamtsystem, in dem Zustand, in welchem alle Untereinheiten ordnungsgemäß miteinander verbunden sind die Größe eines Bordküchenrollwagens, z.B. nach dem Atlas-Standard, aufweisen.

Nachfolgend werden Ausführungsbeispiele der Erfindung anhand der Zeichnungen näher erläutert. Es zeigen:
- Fig. 1: eine schematische Querschnittsansicht einer erfindungsgemäßen Energieeinheit; und
- Fig. 2: eine schematische Ansicht einer mit der Energieeinheit nach Fig. 1 ausgestatteten Aufnahmebucht eines Kabinenmonuments.

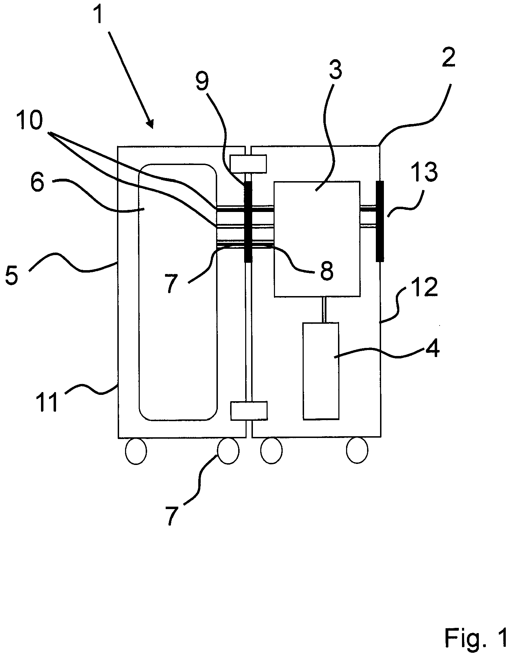

Fig. 1 zeigt eine Energieeinheit 1 welche dazu ausgebildet ist, einen Betriebsstoff an Bord eines Flugzeugs, genauer in der Kabine eines Flugzeugs, zu erzeugen. Bei dem Betriebsstoff kann es sich insbesondere um elektrische Energie, thermische Energie und/oder weitere Betriebsstoffe wie Inertisierungsgase, Wasser usw. handeln.

Die Energieeinheit 1 umfasst eine Brennstoffzelleneinheit 2 mit einer Brennstoffzelle 3. Ferner umfasst die Brennstoffzelleneinheit 2 in der vorliegenden Ausgestaltung eine Batterieeinheit 4 mit einer zur Speicherung elektrischer Energie ausgebildeten Sekundärbatterie. Hierbei ist anzumerken, dass die Batterieeinheit 4 optional ist, und ggf. auch in Form einer separaten Komponente oder Untereinheit ausgebildet sein kann.

Die Energieeinheit 1 umfasst des Weiteren eine von der Brennstoffzelleneinheit 2 separat handhabbare Speichereinheit 5. Die Speichereinheit 5 umfasst einen Speicher 6, welcher dazu ausgebildet und eingerichtet ist, einen zum Betrieb der Brennstoffzelleneinheit 2 erforderlichen Energieträger, insbesondere einen Energieträger zur Erzeugung von elektrischer Energie durch die Brennstoffzelle 3, zu speichern. Als Energieträger eignen sich beispielsweise Propylenglycol, Methanol, Ethanol, Wasserstoff, Methan und andere, insbesondere flüssige oder gasförmige, Stoffe. Bezüglich der möglichen Energieträger wird insbesondere auf obige Ausführungen verwiesen.

Die Brennstoffzelleneinheit 2 und die Speichereinheit 5 sind im vorliegenden Beispiel beide als separat voneinander handhabbare, kofferartige Rollwägen ausgebildet, und weisen insoweit entsprechende Rollen 7 zur rollenden Bewegung der Einheiten 2, 5 auf einem Untergrund auf.

Die Speichereinheit 5 und die Brennstoffzelleneinheit 2 sind in der Darstellung der Fig. 1 aneinander gekoppelt dargestellt. Generell sind die Speichereinheit 5 und die Brennstoffzelleneinheit 2 dazu ausgebildet miteinander gekoppelt zu werden und zwar derart, dass im aneinandergekoppelten Zustand zumindest ein erster Anschluss 7 der Speichereinheit 5 mit einem korrespondierenden zweiten Anschluss 8 der Brennstoffzelleneinheit 2 automatisch miteinander verbunden werden.

Die gegenseitige Kopplung bzw. Verbindung des ersten 7 und zweiten Anschlusses 8 erfolgt derart, dass diese betriebsbereit miteinander verbunden sind. Bei dem ersten 7 und zweiten Anschluss 8 der Fig. 1 handelt es sich im vorliegenden Beispiel um Anschlüsse für den Energieträger zum Betrieb der Brennstoffzelle 3. Insoweit sind der erste 7 und zweite Anschluss 8 derart miteinander verbunden, dass ein im Speicher 6 enthaltener Energieträger der Brennstoffzelle 3 zu deren Betrieb zugeführt werden kann. Bei der vorliegenden Ausgestaltung ist die Brennstoffzelle 3 automatisch mit dem Speicher 6 verbunden und kann mit dem Energieträger versorgt werden, sobald die Brennstoffzelleneinheit 2 und die Speichereinheit 5 ordnungsgemäß miteinander verbunden sind.

Eine Verbindung der Speichereinheit 5 mit der Brennstoffzelleneinheit 2 kann beispielsweise über verriegelbare Spann-, Rast-, und Schnappelemente und/oder über Schnellverbinder usw. erfolgen.

Der erste 7 und zweite Anschluss 8 sind im vorliegenden Beispiel Bestandteil jeweils eines Verbinders 9, bei welchem es sich im vorliegenden Fall um einen genormten Verbinder 9 handelt, insoweit als dieser eine definierte Anzahl und eine definierte Anordnung jeweiliger Anschlüsse umfasst.

Wie in Fig. 1 zu sehen ist, umfasst der Verbinder 9 noch zwei weitere Anschlüsse 10, die beispielsweise zur Übertragung bzw. zum Austausch von elektrischer Energie, von Brennstoffzellenabgasen zur Inertisierung des Innenvolumen des Umgehäuses 11 der Speichereinheit 5 und anderen vorgesehen sein können.

Die Verwendung von Brennstoffzellenabgasen zur Inertisierung ist auch für die Brennstoffzelleneinheit 2 selbst möglich, indem beispielsweise das weitere Umgehäuse 12 mit Brennstoffzellenabgasen beaufschlagt, insbesondere geflutet wird. Ferner ist es möglich, das innere Volumen des Speichers 6 mit inertisierenden Brennstoffzellenabgasen zu beaufschlagen.

Die Brennstoffzelleneinheit 2 umfasst ferner eine erste Schnittstelle 13, die dazu ausgebildet ist, durch die Brennstoffzelle 3 erzeugte Betriebsstoffe, wie z.B. elektrische Energie, thermische Energie, und/oder Brennstoffzellenabgase, Reaktions- oder Produktwasser usw., an einen externen Verbraucher abzugeben, und/oder elektronische Daten oder ähnliches mit externen Komponenten, insbesondere etwaigen Steuereinheiten, auszutauschen.

Im vorliegenden Beispiel weist die erste Schnittstelle 13 zwei weitere Anschlüsse 13 auf, die dazu ausgebildet sind, elektrische Energie und elektronische Daten an externe Verbraucher und/oder externe Komponenten abzugeben bzw. an diese zu übertragen oder mit diesen auszutauschen.

Die erste Schnittstelle 13 weist bevorzugt eine Normung, d. h. definierte Anzahl, Anordnung und Art von Anschlüssen, auf. Generell können der Verbinder 9 und die erste Schnittstelle 13 identisch konfiguriert sein, d. h. gleiche Normung aufweisen. Auf diese Weise ist eine besonders flexible Handhabung und wechselseitige Verbindung der jeweiligen Komponenten bzw. Schnittstellen möglich.

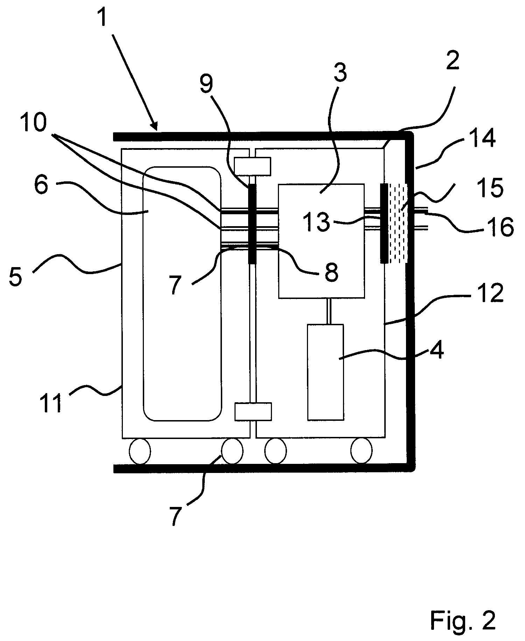

Wie aus Fig. 2 ersichtlich ist, kann die Energieeinheit 1 des Weiteren eine Aufnahmebucht 14 umfassen, welche dazu ausgebildet ist und speziell dazu eingerichtet ist, die in Fig. 1 gezeigten, Komponenten, konkret die Brennstoffzelleneinheit 2 und die Speichereinheit 5, insbesondere im miteinander gekoppelten Zustand, aufzunehmen.

Die Aufnahmebucht 14 ist im Speziellen derart ausgestaltet, dass die durch die Brennstoffzelleneinheit 2 bzw. die Brennstoffzelle 3 erzeugten Betriebsstoffe, insbesondere elektrische Energie der Brennstoffzelle 3, thermische Energie, inertisierungsfähige Brennstoffzellenabgase, Wasser, sowie elektrische Energie der Batterie externen Verbrauchern zugeführt werden kann. Externe Verbraucher können beliebige Verbraucher eines Kabinenmonuments bzw. der Kabine sein. Insbesondere können die Verbraucher Geräte einer als Kabinenmonument ausgebildeten Bordküche sein.

In der Aufnahmebucht sind die Speichereinheit 5 und die Brennstoffzelleneinheit 2 mobil austauschbar aufgenommen. Insbesondere ist es in der in Fig. 2 gezeigten Ausführung möglich, die Speichereinheit 5 von der Brennstoffzelleneinheit 2 manuell zu lösen und aus der Aufnahmebucht 14 zu entfernen, wobei die Brennstoffzelleneinheit 2 in der Aufnahmebucht 14 verbleibt bzw. verbleiben kann. So kann in einfacher Weise eine Speichereinheit 5 mit leerem Speicher durch eine Speichereinheit 5 mit gefülltem bzw. vollem Speicher ausgetauscht werden.

Aufgrund der Tatsache, dass die Brennstoffzelleneinheit 2 ebenfalls mobil in der Aufnahmebucht 14 aufgenommen ist, kann diese, beispielsweise zu Wartungszwecken oder bei Umkonfiguration, ebenfalls in einfacher Weise entfernt bzw. ausgetauscht werden.

Die Aufnahmebucht 14 kann derart ausgebildet sein, dass auch Rollwägen, insbesondere übliche Trolleys, die nicht als Energieeinheiten 1 im Sinne dieser Anmeldung ausgebildet sind, darin aufgenommen werden können.

Die Aufnahmebucht 14 weist ferner eine zur ersten Schnittstelle 13 korrespondierende zweite Schnittstelle 15 auf. Die erste Schnittstelle 13 und zweite Schnittstelle 15, sowie insbesondere die Brennstoffzelleneinheit 2 und die Aufnahmebucht 14, sind derart ausgestaltet, dass die beiden Schnittstellen 13, 15 automatisch miteinander verbunden werden, wenn zumindest die Brennstoffzelleneinheit 2 ordnungsgemäß in der Aufnahmebucht 14 aufgenommen ist, und dass die beiden Schnittstellen 13, 15 automatisch voneinander getrennt werden, wenn zumindest die Brennstoffzelleneinheit 2 aus der Aufnahmebucht 14 entfernt wird.

Die zweite Schnittstelle 15 weist zumindest für die an externe Verbraucher zu übertragenden Betriebsstoffe, d. h. elektrische Energie, thermische Energie, Brennstoffzellenabgase, Wasser, usw., jeweils angepasste Schnittstellenanschlüsse 16 auf, und kann ferner weitere Schnittstellenanschlüsse zur Datenübertragung von und/oder zur Energieeinheit aufweisen.

Die erste Schnittstelle 13 kann korrespondierend zur Anordnung, Anzahl und Art der Schnittstellenanschlüsse 16 ausgebildet sein, derart dass eine Übertragung von Betriebsstoffen und ggf. Daten zwischen der Energieeinheit 1 und externen Komponenten, insbesondere Verbrauchern, im aneinandergekoppelten Zustand ohne Weiteres möglich ist.

Die Energieeinheit 1, insbesondere die Brennstoffzelleneinheit 2 oder die Speichereinheit 5, kann ferner einen (nicht gezeigten) Reformer aufweisen, der dazu ausgebildet ist, einen mit dem Speicher 6 bereitgestellten Primärbrennstoff in einen zum Betrieb der Brennstoffzelle 3 geeigneten Sekundärbrennstoff umzuwandeln. Als Primärbrennstoff kann, wie auch weiter oben bereits ausgeführt wurde, insbesondere Propylenglycol, Methanol, Ethanol, Propanol, Kerosin, Diesel, Dimethylether, N-Ethylcarbazol usw. verwendet werden.

Die in FIG. 1 und FIG. 2 gezeigte Energieeinheit 1 bzw. Kombination aus Energieeinheit 1 und Aufnahmebucht 14 kann/können insbesondere Bestandteil eines Kabinenmonuments einer Kabine eines Verkehrsflugzeugs sein. Anders ausgedrückt kann das Kabinenmonument eine Energieeinheit 1 mit einer Aufnahmebucht 14 umfassen, wobei die Aufnahmebucht in das Kabinenmonument integriert sein kann. Durch die Energieeinheit 1 ist insbesondere eine dezentrale Versorgung mit zumindest elektrischer Energie möglich. Bei dem Kabinenmonument kann es sich insbesondere um eine Bordküche, um ein Sanitärmodul oder um ein Aufenthaltsmodul usw. handeln.

Mit der in FIG. 1 und FIG. 2 vorgeschlagenen Energieeinheit 1 ist es möglich, die Kabine oder ein Kabinenmonument, insbesondere darin vorgesehene externe Verbraucher, dezentral bzw. lokal mit einem durch die Energieeinheit 1 erzeugten oder bereitgestellten Betriebsstoff zu versorgen. Die Verwendung der Energieeinheit 1 ermöglicht damit einen autarken Betrieb einzelner Segmente der Kabine, oder gar einen autarken Betrieb der gesamten Kabine, insbesondere eines Verkehrsflugzeugs.

Insbesondere bei entsprechender Dimensionierung der Energieeinheit 1, oder etwaiger mehrerer Energieeinheiten, ist es beispielsweise möglich, dass die Kabine autark mit den jeweils erforderlichen Betriebsstoffen, insbesondere elektrischer Energie, versorgt wird. Autark soll dabei insbesondere bedeuten, dass die Kabine unabhängig und vollumfänglich selbständig von anderen, zum Betrieb des Fahrzeugs, insbesondere Verkehrsflugzeugs, vorgesehenen Energiequellen und Energienetzen betrieben werden kann. Insbesondere bedeutet das, dass die von der Kabine und deren Verbraucher bei gewöhnlichem Betrieb verbrauchte elektrische Energie ausschließlich durch die Energieeinheit 1 erzeugt werden kann.

Eine vollständig unabhängige, insbesondere von weiteren, beispielsweise zum Betrieb flugrelevanter Komponenten vorhandenen, Energienetzen entkoppelte und eigenständige Versorgung der Kabine mit Betriebsstoffen ist damit möglich. Das hat insoweit den Vorteil als die sich dadurch ergebenden Energieversorgungssysteme, beispielsweise unterteilt in flugrelevant und nicht-flugrelevant, entsprechend der jeweiligen Sicherheitsanforderungen dimensioniert und auslegt werden können.

Insgesamt, und insbesondere aus der Beschreibung der Figuren ergibt sich, dass die hierin vorgeschlagene Energieeinheit eine vergleichsweise einfache Handhabung ermöglicht.

### Bezugszeichenliste

- 1: Energieeinheit
- 2: Brennstoffzelleneinheit
- 3: Brennstoffzelle
- 4: Batterieeinheit
- 5: Speichereinheit
- 6: Speicher
- 7: erster Anschluss
- 8: zweiter Anschluss
- 9: Verbinder
- 10: weitere Anschlüsse
- 11: Umgehäuse
- 12: weiteres Umgehäuse
- 13: erste Schnittstelle
- 14: Aufnahmebucht
- 15: zweite Schnittstelle
- 16: Schnittstellenanschluss

## Patentansprüche

1. Energieeinheit (1) zur Erzeugung eines Betriebsstoffs an Bord eines Fahrzeugs, insbesondere Luftfahrzeugs, umfassend eine Brennstoffzelleneinheit (2) mit zumindest einer Brennstoffzelle (3) und eine von der Brennstoffzelleneinheit (2) separat und bevorzugt kofferartig ausgebildete mobile Speichereinheit (5), mit einem Speicher (6) zur Speicherung zumindest eines zum Betrieb der Brennstoffzelleneinheit (2) erforderlichen Energieträgers, wobei die mobile Speichereinheit (5) und die Brennstoffzelleneinheit (2) miteinander koppelbar sind, und wobei im aneinandergekoppelten Zustand zumindest ein erster Anschluss (7) der mobilen Speichereinheit (5) mit einem korrespondierenden, zweiten Anschluss (8) der Brennstoffzelleneinheit (2) verbunden ist, derart, dass zumindest der zumindest eine Energieträger vom Speicher (6) der Brennstoffzelle (3) zugeführt werden kann, **dadurch gekennzeichnet, dass** die mobile Speichereinheit (5) einen zumindest den Speicher (6) tragenden ersten Rollwagen umfasst und wobei die Brennstoffzelleneinheit (2) einen zweiten Rollwagen umfasst, in welchem zumindest eine Brennstoffzelle (3) aufgenommen ist, wobei der zweite Anschluss (8) am zweiten Rollwagen angebracht sind.

2. Energieeinheit (1) nach Anspruch 1, wobei im aneinandergekoppelten Zustand jeweils zumindest ein weiterer Anschluss (10) der mobilen Speichereinheit (5) und der Brennstoffzelleneinheit (2) miteinander verbunden sind, derart, dass zwischen der mobilen Speichereinheit (5) und Brennstoffzelleneinheit (2) elektrische Energie, thermische Energie, elektronische Daten und/oder Brennstoffzellenabgase austauschbar ist.

3. Energieeinheit (1) nach einem der Ansprüche 1 oder 2, wobei der erste (7) und zweite Anschluss (8), und ggf. die weiteren Anschlüsse (10), derart ausgebildet sind, dass diese bei Aneinanderkopplung der Brennstoffzelleneinheit (2) und der mobilen Speichereinheit (5), insbesondere des ersten und zweiten Rollwagens, automatisch miteinander verbunden werden.

4. Energieeinheit (1) nach einem der Ansprüche 1 bis 3, umfassend des weiteren zumindest eine Aufnahmebucht (14) eines Kabinenmonuments, insbesondere einer Bordküche, eines Fahrzeugs, insbesondere eines Verkehrsflugzeugs, wobei die zumindest eine Aufnahmebucht (14) dazu ausgebildet ist, zumindest die Brennstoffzelleneinheit (2) und/oder die mobile Speichereinheit (5), insbesondere den ersten Rollwagen, darin mobil austauschbar aufzunehmen.

5. Energieeinheit nach Anspruch 4, wobei die Brennstoffzelleneinheit (2), insbesondere der zweite Rollwagen, und die mobile Speichereinheit (5), insbesondere der erste Rollwagen, jeweils gesondert in die zumindest eine Aufnahmebucht (14) aufgenommen und/oder davon entfernt werden können.

6. Energieeinheit (1) nach einem der Ansprüche 4 oder 5, wobei die Brennstoffzelleneinheit (2), insbesondere der zweite Rollwagen, eine erste Schnittstelle (13) und die Aufnahmebucht (14) eine damit verbindbare zweite Schnittstelle (15) aufweisen, wobei die erste (13) und zweite Schnittstelle (15) beim Einführen bzw. Entfernen der Brennstoffzelleneinheit (2) in bzw. von der Aufnahmebucht (14) bevorzugt automatisch miteinander verbunden bzw. voneinander getrennt werden.

7. Energieeinheit (1) nach Anspruch 6, wobei die erste (13) und zweite Schnittstelle (15) dazu ausgebildet sind, thermische Energie, elektrische Energie, Brennstoffzellenabgase, Reaktionswasser und/oder elektrische Signale auszutauschen.

8. Energieeinheit (1) nach einem der Ansprüche 1 bis 7, wobei der Speicher (6) derart mit der Brennstoffzelleneinheit (2) verbindbar ist, dass im verbundenen Zustand zumindest ein Teilvolumen des durch die Brennstoffzelleneinheit (2) erzeugten Abgases in ein sich bei Leerung des Speichers (6) ausbildendes freies Speichervolumen zu dessen Inertisierung eingeleitet werden kann.

9. Energieeinheit nach einem der Ansprüche 1 bis 8, umfassend des Weiteren ein den Speicher (6) umgebendes erstes Umgehäuse (11) und/oder ein die Brennstoffzelleneinheit (2) umgebendes zweites Umgehäuse (12), wobei ein Abgasstrang der Brennstoffzelleneinheit (2) derart ausgebildet ist, dass das innere Volumen des ersten und/oder zweiten Umgehäuses (11, 12) durch Abgase der Brennstoffzelleneinheit (2) inertisierbar sind/ist.

10. Energieeinheit (1) nach einem der Ansprüche 1 bis 9, umfassend des Weiteren einen dem Speicher nachgeordneten Reformer zur Umwandlung eines im Speicher gespeicherten Primärbrennstoffs in einen zum Betrieb der Brennstoffzelle erforderlichen Sekundärbrennstoff, wobei es sich bei dem Primärbrennstoff um ein Propylen-Wasser-Gemisch handelt.

11. Kabinenmonument, insbesondere Bordküche, für eine Kabine eines Fahrzeugs, insbesondere eines Verkehrsflugzeugs, **dadurch gekennzeichnet, dass** es eine Aufnahmebucht (14) umfasst, welche derart ausgebildet ist, dass zumindest eine mobile Speichereinheit (5) einer Energieeinheit (1) nach zumindest dem Anspruch 1 darin derart aufgenommen werden kann, dass im ordnungsgemäß und betriebsbereit aufgenommenen Zustand die Brennstoffzelleneinheit (2) der Energieeinheit (1) mit einem durch die mobile Speichereinheit (5) bereitgestellten Energieträger vorsorgt wird, und durch die Brennstoffzelle (3) der Brennstoffzelleneinheit (2) erzeugte elektrische Energie einem elektrischen Verbraucher zugeführt und/oder in ein elektrisches Verbrauchernetz des Fahrzeugs, insbesondere der Kabine und/oder des Monuments, eingespeist werden kann.

12. Fahrzeug, insbesondere Verkehrsflugzeug, umfassend eine Kabine mit einem Kabinenmonument nach Anspruch 11 oder einer Energieeinheit nach einem der Ansprüche 1 bis 10.

13. Fahrzeug nach Anspruch 12, wobei ein Energienetz des Kabinenmonuments oder der Energieeinheit von weiteren Energie- und/oder Bordnetzen des Fahrzeugs im regulären Betrieb, insbesondere vollständig, entkoppelt ist.

14. Verfahren zur Versorgung einer Kabine, insbesondere eines Kabinenmonuments, eines Fahrzeugs, insbesondere eines Verkehrsflugzeugs, mit zumindest einem Betriebsstoff, wobei eine Brennstoffzelleneinheit (2) einer Energieeinheit (1) nach einem der Ansprüche 1 bis 10 mit einem Energieträger eines Speichers (6) einer von der Brennstoffzelleneinheit (2) separat ausgebildeten mobilen Speichereinheit (5) zur Erzeugung des zumindest einen Betriebsstoffs versorgt wird, und der durch die Brennstoffzelleneinheit (2) erzeugte Betriebsstoff, insbesondere in Form von elektrischer Energie, thermischer Energie und/oder Brennstoffzellenabgasen, einem Verbraucher der Kabine zugeführt wird.

15. Verfahren nach Anspruch 14, wobei zur Versorgung der Brennstoffzelleneinheit (2) mit dem zum Betrieb erforderlichen Energieträger die mobile Speichereinheit (5) austauschbar mit der Brennstoffzelleneinheit (2) gekoppelt wird, wobei Anschlüsse (7,8,10) zum Austausch des Energieträgers bei der Kopplung der mobilen Speichereinheit (5) mit der Brennstoffzelleneinheit (2) automatisch miteinander verbunden werden.

16. Verfahren nach einem der Ansprüche 14 oder 15, wobei durch die Energieeinheit (1) erzeugte Energie, insbesondere elektrische Energie, in ein Energienetz eingespeist wird, welches vollständig getrennt ist von einem weiteren Energienetz des Fahrzeugs, insbesondere Luftfahrzeugs, wobei das Energienetz dazu ausgelegt und eingerichtet ist, im Normalbetrieb zumindest Phasenweise ausschließlich zum Betrieb des Fahrzeugs nicht-essentielle Verbraucher mit Energie, insbesondere elektrischer Energie, zu versorgen, und wobei das weitere Energienetz dazu ausgelegt und eingerichtet ist, im Normalbetrieb zumindest Phasenweise ausschließlich zum Betrieb des Fahrzeugs essentielle Verbraucher mit Energie, insbesondere elektrischer Energie, zu versorgen.

## Claims

1. Energy unit (1) for producing an operating material on board a vehicle, in particular an aircraft, comprising a fuel cell unit (2) with at least one fuel cell (3) and a mobile storage unit (5), which is formed separately from the fuel cell unit (2) and preferably in a case-like manner, with a store (6) for storing at least one energy source necessary for operation of the fuel cell unit (2), wherein the mobile storage unit (5) and the fuel cell unit (2) can be coupled with one another, and wherein, in the state coupled to one another, at least a first terminal (7) of the mobile storage unit (5) is connected to a corresponding second terminal (8) of the fuel cell unit (2) in such a way that at least the at least one energy source can be supplied from the store (6) to the fuel cell (3), **characterized in that** the mobile storage unit (5) comprises a first dolly supporting at least the store (6) and wherein the fuel cell unit (2) comprises a second dolly, in which at least one fuel cell (3) is received, wherein the second terminal (8) is mounted on the second dolly.

2. Energy unit (1) according to Claim 1, wherein, in the state coupled to one another, at least one further terminal (10) of the mobile storage unit (5) and of the fuel cell unit (2) are interconnected in such a way that electrical energy, thermal energy, electronic data and/or fuel cell waste gases can be exchanged between the mobile storage unit (5) and fuel cell unit (2).

3. Energy unit (1) according to one of Claims 1 or 2, wherein the first (7) and second terminal (8) and where applicable the further terminals (10) are designed in such a way that these are automatically interconnected when the fuel cell unit (2) and the mobile storage unit (5), in particular the first and second dolly, are coupled to one another.

4. Energy unit (1) according to one of Claims 1 to 3, further comprising at least one receiving bay (14) of a cabin monument, in particular of a galley, of a vehicle, in particular of a passenger aircraft, wherein the at least one receiving bay (14) is designed to receive therein at least the fuel cell unit (2) and/or the mobile storage unit (5), in particular the first dolly, in a mobile and exchangeable manner.

5. Energy unit according to Claim 4, wherein the fuel cell unit (2), in particular the second dolly, and the mobile storage unit (5), in particular the first dolly, can be received in and/or removed from the at least one receiving bay (14), separately in each case.

6. Energy unit (1) according to one of Claims 4 or 5, wherein the fuel cell unit (2), in particular the second dolly, has a first interface (13), and the receiving bay (14) has a second interface (15) connectable to the first interface, wherein the first (13) and second interface (15) are automatically interconnected or separated from one another as the fuel cell unit (2) is introduced into or removed from the receiving bay (14) respectively.

7. Energy unit (1) according to Claim 6, wherein the first (13) and second interface (15) are designed to exchange thermal energy, electrical energy, fuel cell waste gases, reaction water and/or electrical signals.

8. Energy unit (1) according to one of Claims 1 to 7, wherein the store (6) can be connected to the fuel cell unit (2) in such a way that in the connected state at least a partial volume of the waste gas produced by the fuel cell unit (2) can be introduced into a free storage volume, which forms as the store (6) is emptied, in order to make said free storage volume inert.

9. Energy unit according to one of Claims 1 to 8, further comprising a first casing (11) surrounding the store (6) and/or a second casing (12) surrounding the fuel cell unit (2), wherein a waste gas tract of the fuel cell unit (2) is formed in such a way that the inner volume of the first and/or second casing (11, 12) can be made inert by waste gases of the fuel cell unit (2).

10. Energy unit (1) according to one of Claims 1 to 9, further comprising a reformer arranged downstream of the store for converting a primary fuel stored in the store into a secondary fuel necessary for operation of the fuel cell, wherein the primary fuel may preferably be a propylene/water mixture.

11. Cabin monument, in particular galley, for a cabin of a vehicle, in particular a passenger aircraft, **characterized in that** it comprises a receiving bay (14), which is designed and set up in such a way that at least one mobile storage unit (5) of an energy unit (1) as claimed at least in claim 1 can be received therein, in such a way that the fuel cell unit (2) of the energy unit (1), in the properly received state ready for operation, is supplied with an energy source provided by the mobile storage unit (5), and electrical energy produced by the fuel cell (3) of the fuel cell unit (2) can be supplied to an electrical consumer and/or can be fed into an electrical consumer network of the vehicle, in particular of the cabin and/or the monument.

12. Vehicle, in particular passenger aircraft, comprising a cabin with a cabin monument according to Claim 11 or an energy unit according to one of Claims 1 to 10.

13. Vehicle according to Claim 12, wherein a power supply network of the cabin monument or of the energy unit is decoupled, in particular completely, from further energy and/or on-board networks of the vehicle in regular operation.

14. Method for supplying a cabin, in particular a cabin monument of a vehicle, in particular of a passenger aircraft, with at least one operating material, wherein a fuel cell unit (2) of an energy unit (1) according to one of Claims 1 to 10 is supplied with an energy source of a store (6) of a mobile storage unit (5) formed separately from the fuel cell unit (2) for production of the at least one operating material, and the operating material produced by the fuel cell unit (2), in particular in the form of electrical energy, thermal energy and/or fuel cell waste gases, is supplied to a consumer of the cabin.

15. Method according to Claim 14, wherein the mobile storage unit (5) is coupled exchangeably to the fuel cell unit (2) in order to supply the fuel cell unit (2) with the energy source necessary for operation, wherein terminals (7, 8, 10) for exchanging the energy source when coupling the mobile storage unit (5) to the fuel cell unit (2) are automatically connected to one another.

16. Method according to one of Claims 14 or 15, wherein energy produced by the energy unit (1), in particular electrical energy, is fed into a power supply network that is completely separate from a further power supply network of the vehicle, in particular aircraft, wherein the power supply network is designed and set up, in the normal operating mode, to supply energy, in particular electrical energy, at least in phases exclusively to consumers that are non-essential for operation of the vehicle, and wherein the further power supply network is designed and set up, in the normal operating mode, to supply energy, in particular electrical energy, at least in phases exclusively to consumers that are essential for operation of the vehicle.

## Revendications

1. Unité à énergie (1) destinée à générer une matière consommable à bord d'un véhicule, notamment d'un aéronef, comprenant une unité à pile à combustible (2) comportant au moins une pile à combustible (3) et une unité de stockage mobile (5) séparée de l'unité à pile à combustible (2) et de préférence réalisée sous la forme d'un coffre comportant un dispositif de stockage (6) destiné à stocker au moins un support d'énergie nécessaire pour le fonctionnement de l'unité à pile à combustible (2), dans laquelle l'unité de stockage mobile (5) et l'unité à pile à combustible (2) peuvent être couplées l'une à l'autre, et dans laquelle au moins une première borne (7) de l'unité de stockage mobile (5), à l'état couplé l'une à l'autre, est connectée à une seconde borne (8) correspondante de l'unité à pile à combustible (2) de manière à ce que l'au moins un support d'énergie puisse être acheminé du dispositif de stockage (6) à la pile à combustible (3), **caractérisé en ce que** l'unité de stockage mobile (5) comprend un premier chariot roulant portant le dispositif de stockage (6) et dans laquelle l'unité à pile à combustible (2) comprend un second chariot roulant dans lequel est logée au moins une pile à combustible (3), dans laquelle la seconde borne (8) est montée sur le second chariot roulant.

2. Unité à énergie (1) selon la revendication 1, dans laquelle, à l'état couplé l'une à l'autre, au moins une autre borne (10) de l'unité de stockage mobile (5) et de l'unité à pile à combustible (2) sont connectées l'une à l'autre de manière à ce que, entre l'unité de stockage mobile (5) et l'unité à pile à combustible (2), de l'énergie électrique, de l'énergie thermique, des données électroniques et/ou des gaz d'échappement de la pile à combustible puissent être échangés.

3. Unité à énergie (1) selon l'une quelconque des revendications 1 et 2, dans laquelle les première (7) et seconde (8) bornes et, le cas échéant, l'autre borne (10), sont conçues de manière à ce qu'elles soient automatiquement connectées l'une à l'autre lors du couplage l'une à l'autre de l'unité à pile à combustible (2) et de l'unité de stockage mobile (5), notamment des premier et second chariots roulants.

4. Unité à énergie (1) selon l'une quelconque des revendications 1 à 3, comprenant en outre au moins un logement (14) d'un monument de cabine, notamment d'une cuisine de bord d'un véhicule, notamment d'un aéronef de transport, dans lequel l'au moins un logement (14) est conçu pour recevoir de manière mobile dans celui-ci et de façon échangeable, au moins l'unité à pile à combustible (2) et/ou l'unité de stockage mobile (5), notamment le premier chariot roulant.

5. Unité à énergie selon la revendication 4, dans laquelle l'unité à pile à combustible (2), notamment le second chariot roulant, et l'unité de stockage mobile (5), notamment le premier chariot roulant, peuvent être reçus de manière séparée dans l'au moins un logement (14) et/ou en être retirés.

6. Unité à énergie (1) selon la revendication 4 ou 5, dans laquelle l'unité à pile à combustible (2), notamment le second chariot roulant, comprend une première interface (13) et le logement (14) comprend une seconde interface (15) pouvant lui être connectée, dans laquelle les première (13) et seconde (15) interfaces, lors de l'introduction et du retrait de l'unité à pile à combustible (2) dans le logement (14) ou hors de celui-ci, sont automatiquement connectées l'une à l'autre, ou séparées l'une de l'autre.

7. Unité à énergie (1) selon la revendication 6, dans laquelle les première (13) et seconde (15) interfaces sont réalisées de manière à échanger de l'énergie thermique, de l'énergie électrique, des gaz d'échappement de pile à combustible, de l'eau de réaction et/ou des signaux électriques.

8. Unité à énergie (1) selon l'une quelconque des revendications 1 à 7, dans laquelle le dispositif de stockage (6) peut être relié à l'unité à pile à combustible (2) de manière à ce que, à l'état connecté, au moins un volume partiel des gaz d'échappement produits par l'unité à pile à combustible (2) puisse être acheminé dans un volume de stockage libre formé par vidage du dispositif de stockage (6) pour sa mise à l'état inerte.

9. Unité à énergie selon l'une quelconque des revendications 1 à 8, comprenant en outre une première enveloppe (11) entourant le dispositif de stockage (6) et/ou une seconde enveloppe (12) entourant l'unité à pile à combustible (2), dans laquelle une conduite de gaz d'échappement de l'unité à pile à combustible (2) est réalisée de manière à ce que le volume interne de première et/ou la de la seconde enveloppe (11, 12) puisse être mis à l'état inerte par des gaz d'échappement de l'unité à pile à combustible (2).

10. Unité à énergie (1) selon l'une quelconque des revendications 1 à 9, comprenant en outre un reformeur disposé en aval du dispositif de stockage pour convertir un combustible primaire stocké dans le dispositif de stockage en un combustible secondaire nécessaire au fonctionnement de la pile à combustible, dans laquelle le combustible primaire est un mélange propylène-eau.

11. Monument de cabine, notamment cuisine de bord, destiné à la cabine d'un aéronef, notamment d'un aéronef de transport, **caractérisé en ce qu'**il comprend un logement (14) conçu de manière à ce qu'au moins une unité de stockage mobile (5) d'une unité à énergie (1) selon au moins la revendication 1 puisse y être reçue, de manière à ce que, lors de son fonctionnement et dans l'état reçu et prêt à fonctionner, l'unité à pile à combustible (2) de l'unité à énergie (1) soit alimentée avec un support d'énergie fourni par l'unité de stockage mobile (5) et à ce que de l'énergie électrique générée par la pile à combustible (3) de l'unité à pile à combustible (2) soit délivrée à un dispositif consommateur électrique et/ou puisse être injectée dans un réseau de dispositifs consommateurs électriques du véhicule, notamment de la cabine et/ou du monument.

12. Véhicule, notamment aéronef de transport, comprenant une cabine comportant un monument de cabine selon la revendication 11 ou une unité à énergie selon l'une quelconque des revendications 1 à 10.

13. Véhicule selon la revendication 12, dans lequel un réseau d'énergie du monument de cabine ou de l'unité à énergie est découplé, notamment entièrement découplé, d'autres réseaux d'énergie et/ou de bord du véhicule lors du fonctionnement normal.

14. Procédé d'alimentation d'une cabine, notamment d'un monument de cabine, d'un véhicule, notamment d'un aéronef de transport, avec au moins une matière consommable, dans lequel une unité à pile à combustible (2) d'une unité à énergie (1) selon l'une quelconque des revendications 1 à 10 comportant un support d'énergie d'un dispositif de stockage (6) d'une unité de stockage mobile (5) réalisée séparément de l'unité à pile à combustible (2) pour générer l'au moins une matière consommable, et la matière consommable générée par l'unité à pile à combustible (2), notamment sous la forme d'énergie électrique, d'énergie thermique et/ou de gaz d'échappement de pile à combustible, est délivrée à un dispositif consommateur.

15. Procédé selon la revendication 14, dans lequel, pour alimenter l'unité à pile à combustible (2) avec le support d'énergie nécessaire au fonctionnement, l'unité de stockage mobile (5) est copulée de manière échangeable à l'unité à pile à combustible (2), dans lequel des bornes (7, 8, 10) destinées à échanger le support d'énergie lors du couplage de l'unité de stockage mobile (5) avec l'unité à pile à combustible (2) sont automatiquement connectées les unes aux autres.

16. Procédé selon l'une quelconque des revendication 14 ou 15, dans lequel de l'énergie générée par l'unité à énergie (1), notamment de l'énergie électrique, est injectée dans un réseau d'énergie qui est entièrement séparé d'un autre réseau d'énergie du véhicule, notamment d'un aéronef, dans lequel le réseau d'énergie est configuré et conçu, lors du fonctionnement normal, au moins par phases, exclusivement pour le fonctionnement du véhicule, pour alimenter en énergie, notamment, en énergie électrique, des dispositifs consommateurs non essentiels, et dans lequel l'autre réseau d'énergie est configuré et conçu, lors du fonctionnement normal, au moins par phases, exclusivement pour le fonctionnement du véhicule, pour alimenter en énergie, notamment en énergie électrique, des dispositifs consommateurs essentiels.
